# EUROPÄISCHE PATENTSCHRIFT

(11) **EP 1 761 725 B1**
(45) Veröffentlichungstag und Bekanntmachung des Hinweises auf die Patenterteilung: **07.05.2008**
(21) Anmeldenummer: 05756540.0
(22) Anmeldetag: 09.06.2005
(51) Int. Cl.: F16N 7/18, F16N 7/22

(54) **ÖLVERSORGUNGSEINRICHTUNG**
OIL SUPPLY DEVICE
DISPOSITIF D'ALIMENTATION EN HUILE

(30) Priorität: 30.06.2004 DE 102004031471
(43) Veröffentlichungstag der Anmeldung: 14.03.2007
(73) Patentinhaber: ZF FRIEDRICHSHAFEN Aktiengesellschaft, 88038 Friedrichshafen (DE)
(72) Erfinder: KLOSE, Harald, 14774 Brandenburg/Havel (DE)
(86) Internationale Anmeldenummer: PCT/EP2005/006175
(87) Internationale Veröffentlichungsnummer: WO 2006/002736

(56) Entgegenhaltungen:
- EP-A- 0 490 548
- DE-A1- 10 161 596
- GB-A- 679 402

## Beschreibung

Die Erfindung betrifft eine Ölversorgungseinrichtung nach der im Oberbegriff von Anspruch 1 näher definierten Art.

In Fahrzeuggetrieben, und insbesondere in Handschaltgetrieben, hat die Beölung von Verzahnungen, Lagerungen und der sich auf und in Wellen befindlichen Losradlagerungen durch die komplexe Bauweise der Fahrzeuggetriebe eine besondere Bedeutung. Einerseits muß eine ausreichende Beölung der Verzahnungen und Lagerungen erreicht werden, andererseits soll eine möglichst kleine Ölmenge ein kleines Schleppmoment zur Erreichung einer guten Schaltbarkeit gewährleisten, was insbesondere bei Handschaltgetrieben einen großen Einfluß auf den Schaltkomfort hat. Ebenso sollen die Öltemperaturen moderat bleiben und die Ölversorgung des Rückwärtsgangrades sowie die Kaltschaltbarkeit des Getriebes müssen gewährleistet sein. Zur Lösung der damit zusammenhängenden Problemstellungen werden verschiedene Arten von Ölpumpen, hohlgebohrten Wellen und Ölleitungen eingesetzt oder es werden Ölleitbleche, Ölbohrungen und/oder erhöhte Ölstände im Fahrzeuggetriebe verwendet. Beim Eintauchen der Zahnräder in das Öl wird dieses willkürlich im Fahrzeuggetriebe, abhängig von Drehzahl, Gang und Fahrzustand des Fahrzeugs, verteilt. Durch feststehende Ölleiteinrichtungen kann versucht werden, das Öl gezielt zu leiten. Bei einer Schrägverzahnung der Bauteile erfolgt eine Förderung des Öl in der Ölwanne in der durch die Schrägverzahnung vorgegebenen Richtung, so dass sich eine unterschiedliche Anhäufung von Öl in der Ölwanne ergibt.

Aus der DE 32 38 790 C1 ist ein Ölschmiersystem für ein Fahrzeuggetriebe bekannt, bei dem eine Fliehkraftpumpe eingesetzt wird, welche das Öl radial nach außen durch Durchbrüche in radial gerichtete Umlenkkanäle leitet. Anschließend kann das Öl über eine Ringnut in das Innere einer hohlgebohrten Getriebewelle gelangen. Obwohl dieses System eine effektive Schmierölversorgung gewährleistet, weist es den Nachteil auf, dass die benötigte Fliehkraftpumpe einen nicht immer zur Verfügung stehenden Bauraum sowie einen hohen Abdichtungsaufwand erfordert.

Des weiteren ist aus der DE 195 01 799 C2 ein Ölschmiersystem für Fahrzeuggetriebe bekannt, umfassend eine ringförmige Kammer, der Schmier- und Kühlöl zugeführt wird, eine rotierende Getriebewelle und ein Förderelement für das Schmier- und Kühlöl, wobei in der rotierenden Getriebewelle mindestens eine achsversetzt angeordnete Schmierölbohrung vorgesehen ist, und das Förderelement aus einem Fang- und Leitblech gebildet ist, das mit dem Getriebegehäuse fest verbunden ist, welche die Querschnittsfläche der Kammer im wesentlichen einnimmt und derart geformt ist, dass sich an dem Fang- und Leitblech das von der rotierenden Getriebewelle geförderte Öl unter Druckbildung staut, durch welches das Schmier- und Kühlöl in die achsversetzt angeordnete Schmierölbohrung gedrückt wird. Auch diese Lösung erfordert in nachteiliger Weise einen relativ hohen Abdichtungsaufwand, insbesondere zwischen der Getriebewelle und dem Innenraum des Getriebegehäuses.

Aus der DE 39 27 775 C2 ist eine weitere Ölzuführeinrichtung zum Zuführen von Schmier- und Kühlöl von einem Gehäuse auf eine sich drehende Welle bekannt, bei der auf der Welle zwei Dichtringe benötigt werden, die in axialem Abstand voneinander angeordnet sind, wobei zwischen den Dichtringen und zwei im Gehäuse im wesentlichen radial in axialem Abstand voneinander angeordneten Dichtflächen Dichtstellen gebildet sind. Hierbei liegen die Dichtringe unter der Vorspannung des zwischen den Dichtringen anstehenden Öldrucks an den Dichtflächen an. Hierbei ist der Abdichtungsaufwand sehr hoch, was in hohen Herstellungs- und Montagekosten resultiert.

In der DE 196 02 041 A1 ist eine Schaltgabel für ein Wechselgetriebe beschrieben, welche eine Einrichtung zum Zuleiten von Spritzöl zu der Synchronisiereinrichtung aufweist, die mit der Schaltgabel betätigt wird. Hierbei soll lediglich eine Überbelastung der Synchronisiereinrichtung dadurch vermieden werden, dass ein gerichteter Ablauf in der Einrichtung vorgesehen ist, der beim Ansynchronisieren der Synchronisiereinrichtung diese mit zusätzlichem Schmieröl versorgt. Diese Einrichtung zum Zuleiten von Spritzöl dient aber nicht einer besseren Beölung einer Vielzahl von Bauteilen im Fahrzeuggetriebe.

Aus der EP 490 548 A2 ist eine Ölversorgungseinrichtung für ein Fahrzeuggetriebe bekannt, wobei eine Welle eine axial Ölversorgung aufweist, und wobei ein Synchronkörper der Synchronisiereinrichtung Bohrungen aufweist.

Insbesondere die Leistungssteigerung von Pkw-Motoren, die zu einer Erhöhung der Verlustleitung von Schaltgetrieben führt, was wiederum einen Anstieg der über das Gehäuse abzugebenden Wärme zur Folge hat, erfordert alternative Schmierkonzepte gegenüber derzeit üblicher Ölsumpf- bzw. Tauchschmierung bei Schaltgetrieben. Weiterhin verhindert die aerodynamische Optimierung von Fahrzeugen und die damit verbundene Kapselung der Unterbodengruppe zunehmend eine Abgabe der Wärme über das Gehäuse.

Der Erfindung liegt die Aufgabe zugrunde, eine Ölversorgungseinrichtung für ein Fahrzeuggetriebe, insbesondere bei einem Kraftfahrzeug-Handschaltgetriebe, darzustellen, um die Beölung von Bauteilen zu verbessern, um eine ausreichende Beölung der Bauteile auch bei sehr hohen Drehzahlen zu gewährleisten.

Die der Erfindung zugrunde liegende Aufgabe wird durch eine, auch die kennzeichnenden Merkmale des Hauptanspruchs aufweisende, gattungsgemäße Ölversorgungseinrichtung gelöst. Über eine axial verlaufende Zentralbohrung in einer Welle des Fahrzeuggetriebes gelangt das Öl über Querbohrungen zu einer Synchronisiereinrichtung. Durch Einbringen von Bohrungen in einen Synchronkörper der Synchronisiereinrichtung in Kombination mit einer sichelförmigen Aussparung in einem Halteblech eines Lagers der Welle kommt es bei einer Drehbewegung und in Drehrichtung strömendem Öl zu einer Verringerung des Volumens zwischen Synchronisiereinrichtung und Lager. Ein Teil-Volumenstrom des Öls wird durch Bohrungen in Welle und Synchronkörper zu den zu beölenden Bauteilen, beispielsweise Lagerstellen, geführt. Überschüssiges Öl kann als Verlust zwischen Synchronisiereinrichtung und Lager radial entweichen. Um die Verluste zu reduzieren, muß der Synchronkörper axial auf der dem Lager abgewandten Seite mit einem Blech verschlossen werden. Der Ölvorrat in der verschlossenen Welle kann zur Beölung von Lagerstellen genutzt werden. Hierzu werden zusätzliche radiale Bohrungen im Bereich der Laufflächen der Lager der Zahnräder in die Welle eingebracht. Der Synchronkörper weist Aussparungen auf der dem Lager zugewandten Seite auf, in denen sich Laschen eines Einlegeteils für den Synchronkörper abstützen. In Anlaufscheiben der Zahnräder werden Nuten eingebracht, die es dem Öl ermöglichen, alle Lagerstellen der Zahnräder zu erreichen. Das Zusammenwirken dieser Maßnahmen bewirkt eine deutliche Verbesserung der Beölung der Bauteile im Fahrzeuggetriebe, auch bei sehr hohen Drehzahlen.

Ein Ausführungsbeispiel der vorliegenden Erfindung ist den Figuren dargestellt und wird im folgenden näher beschrieben.
Es zeigen:
- Fig. 1: einen Teil-Ausschnitt eines Getriebes mit einer erfindungsgemäßen Ölversorgungseinrichtung und
- Fig. 2: eine Draufsicht auf das in Fig. 1 dargestellte Fahrzeuggetriebe.

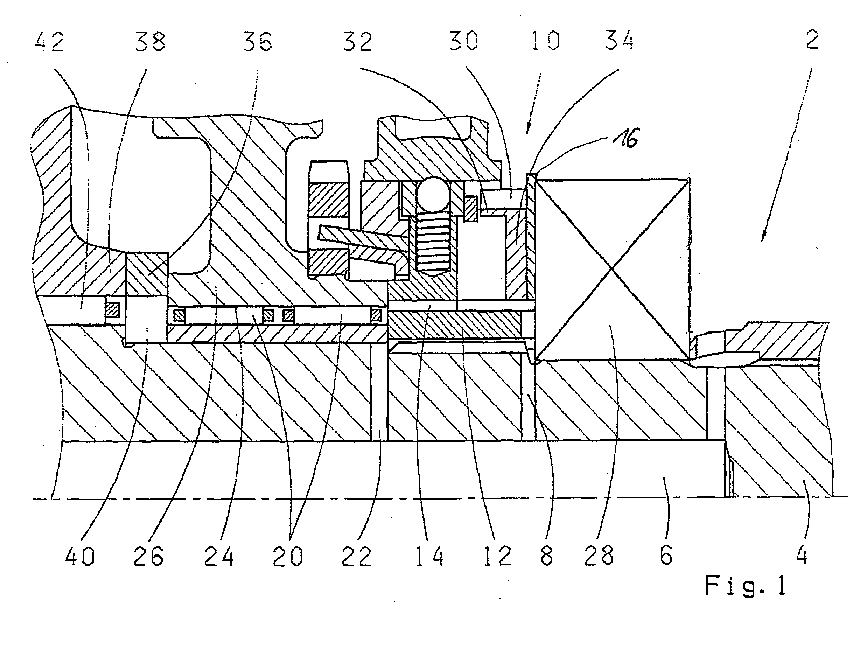

Fig. 1 zeigt einen Teil-Schnitt durch ein erfindungsgemäßes Fahrzeuggetriebe 2 mit einer Welle 4, die eine axial verlaufende Zentralbohrung 6 aufweist. Öl gelangt über Querbohrungen 8 zu einer Synchronisiereinrichtung 10. Ein Synchronkörper der Synchronisiereinrichtung 10 weist eine Bohrung 14 auf, die in Verbindung mit einem Halteblech 16, welches eine sichelförmige Aussparung 18 aufweist, dafür sorgt, dass es bei einer Drehbewegung und in Drehrichtung strömendem Öl zu einer Verringerung des Volumens zwischen Synchronisiereinrichtung 10 und Lager 28 kommt. Ein Teil-Volumenstrom des Öls wird durch eine Zentralbohrung 6 in der Welle 4, die Querbohrung 8 und die Bohrung 14 im Synchronkörper 12 zu den zu beölenden Bauteilen, hier beispielsweise ein Lager 20, geführt. Überschüssiges Öl kann als Verlust zwischen Synchronisiereinrichtung 10 und Lager 20 radial entweichen. Über eine Querbohrung 22 kann eine Lauffläche 24 des Zahnrads 26 mit zusätzlichem Öl versorgt werden. Der Synchronkörper 12 weist auf der dem Lager 28 zugewandten Seite Nuten 30 auf, in denen sich Laschen 32 eines Einlegeteils 34 abstützen. Eine Anlaufscheibe 36 zwischen dem Zahnrad 26 und einem Zahnrad 38 weist Nuten 40 auf, durch die eine verbesserte Ölversorgung eines Lagers 42 des Zahnrads 38 erreicht wird.

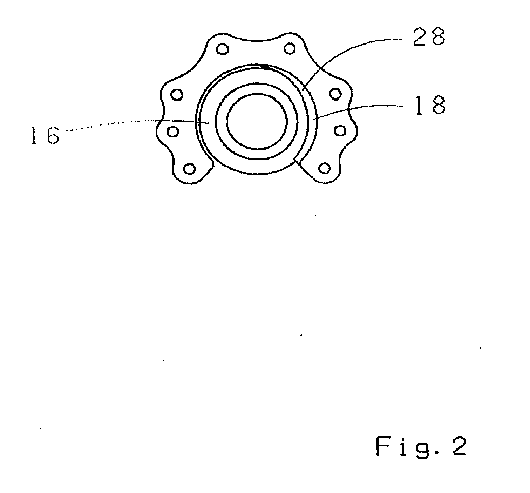

Fig. 2 zeigt ein Gehäuse mit dem im Gehäuse eingepreßten Lager 28 und einer Ausführungsform eines Halteblechs 16 mit sichelförmiger Aussparung 18.

### Bezugszeichen

- 2: Fahrzeuggetriebe
- 4: Welle
- 6: Zentralbohrung
- 8: Querbohrung
- 10: Synchronisiereinrichtung
- 12: Synchronkörper
- 14: Bohrung
- 16: Halteblech
- 18: sichelförmige Aussparung
- 20: Lager
- 22: Querbohrung
- 24: Lagerlauffläche
- 26: Zahnrad
- 28: Lager
- 30: Nut
- 32: Lasche
- 34: Einlegeteil
- 36: Anlaufscheibe
- 38: Zahnrad
- 40: Nut
- 42: Lager

## Patentansprüche

1. Ölversorgungseinrichtung für ein Fahrzeuggetriebe (2) mit auf Wellen (4) angeordneten Zahnrädern (26, 38), mit Lagerungen, in denen die Zahnräder (26, 38) und Wellen (4) drehbar gelagert sind, und mit Synchronisiereinrichtungen (10), die durch Betätigung eines Schalthebels über Schaltstangen und Schaltgabeln in die gewünschten Schaltstellungen bewegt werden, wobei eine Welle (4) eine axial verlaufende Zentralbohrung (6) und mindestens eine Querbohrung (8) zur Ölversorgung aufweist, **dadurch gekennzeichnet, dass** ein Synchronkörper (12) der Synchronisiereinrichtung (10) Bohrungen (14) aufweist, zwischen Synchronisiereinrichtung (10) und einem Lager (28) ein Halteblech (16) angeordnet ist, welches eine sichelförmige Aussparung (18) aufweist, und der Synchronkörper (12) Nuten (30) aufweist, in denen sich Laschen (32) eines Einlegeteils (34) abstützen.

2. Ölversorgungseinrichtung nach Anspruch 1, **dadurch gekennzeichnet, dass** der Synchronkörper (12) axial auf der einem Lager (20) abgewandten Seite mit einem Blech verschlossen ist.

3. Ölversorgungseinrichtung nach Anspruch 1, **dadurch gekennzeichnet, dass** die Welle (4) im Bereich der Lagerlauffläche (24) des Zahnrads (26) mindestens eine Querbohrung (22) aufweist.

4. Ölversorgungseinrichtung nach Anspruch 1, **dadurch gekennzeichnet, dass** zwischen dem Zahnrad (26) und einem Zahnrad (38) eine Anlaufscheibe (36) angeordnet ist, die Nuten (40) aufweist.

## Claims

1. Oil supply system for a vehicle transmission (2), with gears (26, 38) arranged on shafts (4), with mounts in which the gears (26, 38) and shafts (4) are rotatably supported, and with synchronizing devices (10) which are moved into desired shifting positions by shifting rods and shifting forks through actutation of a shift lever, with a shaft (4) featuring an axially located central bore (6) and at least one cross bore (8) for oil supply, **characterized in that** a synchronizer body (12) of the synchronizing device (10) features bores (14), a holding plate (16) is arranged between synchronizer device (10) and a bearing (28), with this holding plate featuring a crescent-shaped recess (18), and with the synchronizer body (12) featuring grooves (30) in which tabs (32) of an insert part (34) are supported.

2. Oil supply system according to claim 1, **characterized in that** the synchronizer body (12) is axially closed by a metal sheet on the side not facing a bearing (20).

3. Oil supply system according to claim 1, **characterized in that** the shaft (4) features at least one cross bore (22) in the area of the bearing surface (24) of the gear (26).

4. Oil supply system according to claim 1, **characterized in that** a stop disk (36) featuring grooves (40) is arranged between the gear (26) and a gear (38).

## Revendications

1. Dispositif d'alimentation en huile destiné à une boîte de vitesses pour véhicules (2) dotée d'engrenages (26, 38) disposés sur des arbres (4), de paliers dans lesquels les engrenages (26, 38) et les arbres (4) sont logés en rotation, et de dispositifs de synchronisation (10), ceux-ci pouvant être déplacés vers les positions crabotées par l'intermédiaire de tiges et fourchettes de commande en actionnant un levier de commande, sachant qu'un arbre (4) comporte un alésage central évoluant axialement (6) et au moins un alésage transversal (8) pour l'alimentation en huile, **caractérisé en ce que** un moyeu (12) du dispositif de synchronisation (10) comporte des alésages (14), **en ce que** entre le dispositif de synchronisation (10) et un palier (28) est disposé une tôle de retenue (16), celle-ci comportant une encoche falciforme (18), et **en ce que** le moyeu (12) comporte des cannelures (30), dans lesquelles sont appuient des languettes (32) d'un élément d'insertion (34).

2. Dispositif d'alimentation en huile selon la revendication 1, **caractérisé en ce que** le moyeu (12) est fermé axialement et à l'aide dune tôle dun côté opposé à un palier (20).

3. Dispositif d'alimentation en huile selon la revendication 1, **caractérisé en ce que** l'arbre (4) comporte dans la zone de la piste de roulement (24) de l'engrenage (26) au moins un alésage transversal (22).

4. Dispositif d'alimentation en huile selon la revendication 1, **caractérisé en ce que** entre l'engrenage (26) et un engrenage (38) est disposée une cale d'appui (36) comportant des cannelures (40).
